# EUROPEAN PATENT SPECIFICATION

(11) **EP 0 649 372 B1**
(45) Date of publication and mention of the grant of the patent: **16.10.1996**
(21) Application number: 93914762.5
(22) Date of filing: 08.07.1993
(51) Int. Cl.: B32B 7/06

(54) **LAMINATED FOIL**
VERBUNDFOLIE
FEUILLE STRATIFIEE

(30) Priority: 08.07.1992 FI 923136
(43) Date of publication of application: 26.04.1995
(73) Proprietor: AHLSTRÖM EURAPAK OY, SF-27501 Kauttua (FI)
(72) Inventor: ALI-ÄIJÄLÄ, Marjo, FIN-27500 Kauttua (FI); LINDH, Lars-Erik, FIN-00840 Helsinki (FI)
(74) Representative: Füchsle, Klaus, Dipl.-Ing.
(86) International application number: FI9300289
(87) International publication number: WO9401276

(56) References cited:
- EP-A- 0 374 629
- US-A- 4 224 379

## Description

The present invention relates to a laminated foil, especially for packing purposes, the foil being produced as an endless web from at least two webs of different kinds of foils, from which foil it is convenient to cut rectangular blanks to be used as packings, as wide as the original endless foil.

The packing industry has lately paid considerably attention to the recovery and recyclability of packing materials. For example, publication WO 92/00190 discloses a container for foodstuffs, which container is made of a plastic-covered metal foil, the thickness of the foil being of the order of some µm. The container can be recycled by melting the metal, whereby the plastic is combusted into carbon dioxide, and the separated metal can be re-used. This kind of method of recycling is not always worth applying, but it is advisable to try to get the different materials of the container separated so that the materials can be recycled separately.

Laminates comprising layers of different materials are being widely used as wrappings. Such laminates are disclosed, for example, in EP-A-0374629, which relates to transparent laminates made from polymers having a high content of hydroxyl groups and having a thermoplastic polyurethaneurea as an adhesive layer. The layers of different materials should be able of being separated simply and easily for recovery. Butter, margarine or the like are packed for retail purposes to parchment-wax-Al-foil laminates and to parchment-Al-PE-foil laminates. Aluminium foil is popular in packings of this kind because of its foldability. This is important when there are no other means of closing besides folding. It is easy to fold a foil so that it stays tightly folded against the product. Besides, metallized plastic foils have very desirable properties for many packing applications, especially for foodstuff packing, as the layer of metal prevents the penetration of humidity, oxygen and smells. Thus, metallized foils are very popular packing materials, but still no methods of making them easily recyclable have been disclosed. It is imperative that the laminate layers can be easily and quickly separated by the consumer.

The object of the present invention is to provide a laminated foil for correcting the above-mentioned drawbacks, i.e. to provide for an easy separation of packing laminates for further treatment, if any, of the different materials.

Thus, the present invention relates to a laminated foil for packing purposes in accordance with claim 1, the foil being produced as an endless web and consisting of at least two different webs of foil, from which foil it is convenient to cut rectangular blanks having the same width as the endless web. A characterizing feature of the invention is that the bond between the layers is such that it keeps the layers together when no external force is exerted on the layers, but allows the layers to be separated either manually or mechanically and that the bond connects the layers essentially at other places than the edge or edges of the foil, the edge being arranged at the longitudinal edges of the endless web.

The invention relates also to blanks made of the laminated foil and their usage.

In a method according to the present invention for producing a laminated foil, an endless web of laminated foil comprising at least two different layers bonded together in a manner known *per se*, from which can be cut blanks, preferably rectangular, having the same width as the endless foil, is directed to a packing machine. An essential feature of the invention is that the bond between the layers is broken along the edge of the endless web at a preset depth for forming a bondless edge prior to forming the blanks. Otherwise The bond is such as to keep the layers together when no external pressure is exerted on them, but it allows the layers to be separated either manually or mechanically.

The problem that the consumer faces with separating the layers is specially that of beginning the separation of layers. Finding a suitable starting point is not easy, as the thin foil materials are tightly fastened together. According to the present invention, the problem is solved by partly opening the edge, i.e. starting the separation already during the wrapping of the product, even before the product has been delivered to the consumer. Thus it is easy for the consumer to get a hold of the layers to be separated, e.g. a plastic foil and a metal foil, when the consumer separates them for recovery.

According to a preferable embodiment of the invention the layers are compressed together subsequent to the breaking of the bond in the edges. Thus the appearance of the foil is kept neat. The layers are compressed together so that no re-laminating occurs. Thus the separation of the layers will still be easy for the consumer.

The bondless edge must be wide enough to enable the consumer to get a good hold of the edges of the layers. Usually a width of about 10 mm is sufficient.

The invention is not limited to laminated foils made of any special materials. Neither is the type of the bonding material limited. The only limitation is that by means of a bonding material it is possible to form a bond between the layers keeping the layers together when no external force is exerted on the layers, but that allows the layers to be separated either manually or mechanically. Besides, it is advisable to choose the strength of the layer material such that the material can be separated as a whole surface and that it is not torn apart until the consumer has completely separated the layers. The invention is especially suitable for use in metal-plastic laminated foils which are widely used in different packings, e.g., as wrappings or wrapped packings.

The method of present invention can very easily be carried out. When the product, e.g. butter, margarine, cheese, chocolate or the like is packed in a laminated wrapping, the bondless edge according to the invention can be formed on the laminated web by means of a tool arranged at the packing machine, the tool being, e.g., a blade-like apparatus or a rotating disc. The web of laminated foil is fed to the packing machine in a manner known *per se*, and before the web is cut into wrapping blanks the tool separates the layers of the laminate on the width of a preset edge area and, if desired, compresses the layers back together. Subsequent to this, the blank is cut off from the web and the product is wrapped into this piece of laminated material.

The bondless edge does not have to be constant in width, but a desired pattern can also be produced. The width may, for example, change so that the widest bondless area is at the corners of the blank to be formed. The width may also fluctuate so that the widest bondless area is located at intervals along the longitudinal edge of web from which the blank are cut. Naturally, other forms of the bondless edge are also possible.

It is possible to form the bondless edge at only one edge of the web. For the consumer it is naturally simpler if both the edges are bondless.

In the following, the invention is described in more detail by way of reference to the enclosed drawings, of which
fig. 1a illustrates in cross-section a laminated foil structure before the method according to the present invention has been applied to it,
fig. 1b illustrates in cross-section a laminated foil according to the invention, and
fig. 2 illustrates, as seen from above, an embodiment for carrying out the method according to the invention, including the web into which the bondless edges are being formed.

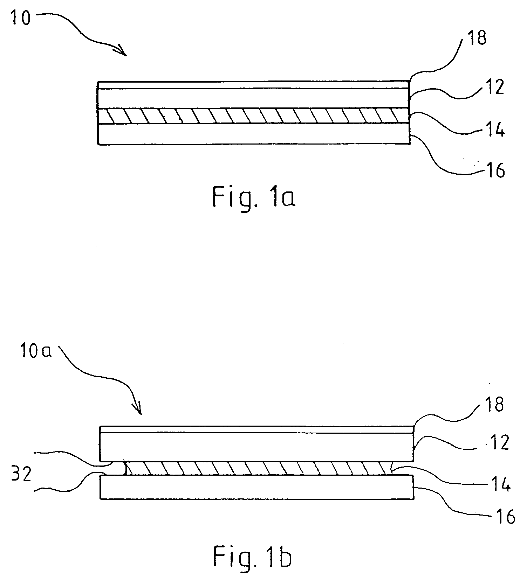

The laminated foil 10 according to fig. 1a comprises an aluminium foil 12, a bonding material 14 and a plastic foil 16. Such a laminated foil can be especially used for packing butter, margarine, cheese or the like by folding. The bonding material is spread on the whole surface of both the aluminium and plastic foils. Preferably, the plastic is biaxially oriented polypropylene, HD-polyethylene or polyester, the thickness of which is approx. 15-60 µm. The bonding material is most suitably a wax-based agent (about 5-20 g/m²). The thickness of the aluminium foil is most preferably 6-12 µm. The strength of the bond between the aluminium foil and the plastic is preferably 2-15 N/m. A text or the like print 18 can be arranged on the aluminium layer, if desired.

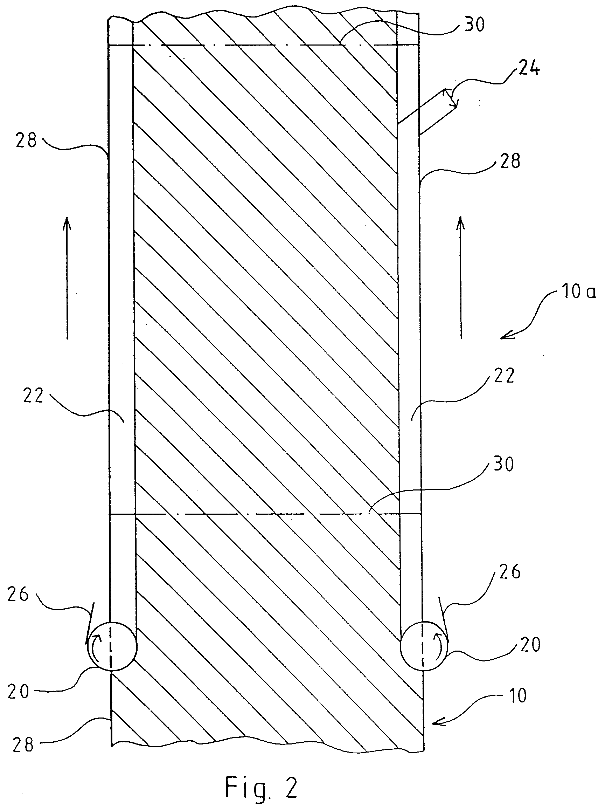

In fig. 2. a laminated foil 10 according to the invention is being fed to a packing apparatus (not shown), into which tools, i.e. thin, rotating discs 20 have been arranged for breaking the bonding material between the aluminium foil and the plastic foil, whereby a bondless edge area 22 is formed. In the fig. 2 embodiment the width 24 of the bondless edge is constant, but the movement of the rotating disc can be regulated by known means in order to change the width. A scraper 26 can be arranged in connection with the disc for removing the bonding material accumulating on the disc. After this, the delaminated parts of the surface are most suitably compressed together to form a neat edge. The compression must be carried out so that no re-laminating occurs.

Subsequent to this the blanks are cut from the web, the surface of the blanks comprising the area between the longitudinal edges 28 of the endless web 10 and the imaginary transverse lines 30.

In a laminated foil according to the invention the laminating bond has been partly removed, as can be seen from fig. 1b, whereby grip surfaces 32 have been formed between the above-mentioned foils. By means of these foils the consumer is able to get a hold for separating both the plastic foil and the Al-foil and so to recover the materials separately for subsequent recycling.

## Claims

1. A laminated foil (10a) for packing purposes, the foil being made as an endless web of at least two different webs of foil or layers kept together by a bonding material (14), which laminated foil is capable of being cut into preferably rectangular blanks having the same width as the endless web, **characterized** in that the strength of the bond realised by the bonding material (14) is of 2-15 N/m, and that the bonding material keeping the layers together has been applied to essentially all other surfaces of the foil between the layers except at least one of the longitudinal edges (28) of the web, which edge is therefore a bondless edge (22).

2. A laminated foil according to claim 1, **characterized in that** the or each bondless edge is formed by breaking the bond between the layers (12, 16) by means of a suitable tool (20).

3. A laminated foil according to claim 1 or 2, **characterized in that** the width (24) of the edge (22) is about 10 mm.

4. A laminated foil according to any of claims 1-3, **characterized in that** the laminated foil consists of an aluminium foil (12) and a plastic foil (16).

5. A laminated foil according to claim 4, **characterized in that** the bond (14) between the layers (12, 16) is formed by means of a wax-based bonding material.

6. A blank made of the foil described in any of claims 1-5.

7. Use of a blank according to claim 6 for making of a wrapping or a wrapped packing.

8. A method of producing a laminated foil (10a), in which method an endless web (10) of laminated foil comprising at least two different layers bonded together in a manner known per se, from which blanks can be cut, preferably rectangular, having the same width as the endless foil, is directed to a packing machine, **characterized in that** the bond (14) between the layers is broken along at least one of the edges (28) of the endless web at a preset depth for forming a bondless edge (22) before the blanks are formed, the strength of the bond being 2-15 N/m.

9. A method according to claim 8, **characterized in that** the bondless area is formed by means of a tool arranged at the packing machine, the tool comprising a blade-like part or a rotating disc (20).

## Patentansprüche

1. Laminierte Folie (10a) für Verpackungszwecke, welche Folie als endlose Bahn aus mindestens zwei unterschiedlichen Folienbahnen oder -schichten hergestellt ist, die von einem Bindemittel (14) zusammengehalten werden, welche laminierte Folie in vorzugsweise rechteckige Zuschnitte der gleichen Breite wie die endlose Bahn geschnitten werden kann, **dadurch gekennzeichnet**, daß die Festigkeit der durch das Bindemittel (14) realisierten Bindung von 2 bis 15 N/m ist, und daß das die Schichten zusammenhaltende Bindemittel im wesentlichen auf alle anderen Flächen der Folie zwischen den Schichten außer mindestens einer der Längskanten (28) der Bahn aufgetragen worden ist, welche Kante deshalb eine bindungslose Kante (22) ist.

2. Laminierte Folie nach Anspruch, **dadurch gekennzeichnet** 1, daß die oder jede bindungslose Kante gebildet wird, indem die Bindung zwischen den Schichten (12, 16) mittels eines passenden Werkzeuges (20) aufgebrochen wird.

3. Laminierte Folie nach Anspruch 1 oder 2, **dadurch gekennzeichnet**, daß die Breite (24) der Kante (22) ungefähr 10 mm ist.

4. Laminierte Folie nach einem der Ansprüche 1 bis 3, **dadurch gekennzeichnet**, daß die laminierte Folie aus einer Aluminiumfolie (12) und einer Kunststoffolie (16) besteht.

5. Laminierte Folie nach Anspruch 4, **dadurch gekennzeichnet**, daß die Bindung (14) zwischen den Schichten (12, 16) mittels eines wachsbasierten Bindemittels gebildet wird.

6. Ein aus der in einem der Ansprüche 1 bis 5 beschriebenen Folie hergestellter Zuschnitt.

7. Anwendung eines Zuschnittes nach Anspruch 6 zur Herstellung eines Umschlags oder einer Umschlagsverpackung.

8. Verfahren zur Herstellung einer laminierten Folie (10a), bei welchem Verfahren eine endlose Bahn (10) aus laminierter Folie, die mindestens zwei unterschiedliche auf an sich bekannte Weise miteinander gebundene Schichten umfaßt, wovon - vorzugsweise rechteckige - Zuschnitte der gleichen Breite wie die endlose Folie abgeschnitten werden können, in eine Verpackungsmaschine geleitet wird, **dadurch gekennzeichnet**, daß die Bindung (14) zwischen den Schichten an mindestens einer der Kanten (28) der endlosen Bahn in voreinstellter Tiefe zur Bildung einer bindungslosen Kante (22) aufgebrochen wird, bevor die Zuschnitte gebildet werden, wobei Festigkeit der Bindung bei 2 bis 15 N/m liegt.

9. Verfahren nach Anspruch 8, **dadurch gekennzeichnet**, daß der bindungslose Bereich mittels eines an der Verpackungsmaschine angeordneten Werkzeuges gebildet wird, welches Werkzeug einen messerähnlichen Teil oder eine rotierende Scheibe (20) aufweist.

## Revendications

1. Feuille stratifiée (10a) pour l'empaquetage, la feuille étant fabriquée en tant que bande sans fin à partir d'au moins deux bandes différentes de feuille ou de couches maintenues ensemble par un matériau liant (14), laquelle feuille stratifiée peut être découpée en flans, de préférence rectangulaires, présentant la même largeur que la bande sans fin, caractérisée en ce que la résistance de la liaison réalisée par le matériau liant (14) est de 2 à 15 N/m, et en ce que le matériau liant maintenant les couches ensemble a été appliqué sensiblement à toutes les autres surfaces de la feuille entre les couches à l'exception d'au moins l'un des bords longitudinaux (28) de la bande, lequel bord est, par conséquent, un bord sans liaison (22).

2. Feuille stratifiée selon la revendication 1, caractérisée en ce que le bord sans liaison ou chacun de ces bords est réalisé en rompant la liaison entre les couches (12, 16) au moyen d'un outil approprié (20).

3. Feuille stratifiée selon la revendication 1 ou 2, caractérisée en ce que la largeur (24) du bord (22) est de l'ordre de 10 mm.

4. Feuille métallique stratifiée selon l'une quelconque des revendications 1 à 3, caractérisée en ce que la feuille stratifiée consiste en une feuille d'aluminium (12) et une feuille en matière plastique (16).

5. Feuille stratifiée selon la revendication 4, caractérisée en ce que la liaison (14) entre les couches (12, 16) est réalisée au moyen d'un matériau liant à base de cire.

6. Flan constitué de la feuille décrite dans au moins l'une des revendications 1 à 5.

7. Utilisation d'un flan selon la revendication 6 afin de fabriquer un emballage ou un empaquetage enveloppé.

8. Procédé de fabrication d'une feuille stratifiée (10a), dans lequel une bande sans fin (10) de la feuille stratifiée comprenant au moins deux couches différentes reliées l'une à l'autre de manière connue en soi, à partir de laquelle des flans, de préférence rectangulaires, présentant la même largeur que la feuille sans fin peuvent être découpés, est dirigée vers une machine à emballer, caractérisé en ce que la liaison (14) entre les couches est rompue le long d'au moins l'un des bords (28) de la bande sans fin sur une profondeur programmée afin de constituer un bord sans liaison (22) avant que les flans soient formés, la résistance de la liaison étant 2-15 N/m.

9. Procédé selon la revendication 8, caractérisé en ce que la zone sans liaison est réalisée à l'aide d'un outil disposé sur la machine à emballer, cet outil comprenant une partie du type lame ou un disque rotatif (20).
